# NEW EUROPEAN PATENT SPECIFICATION

(11) **EP 3 885 210 B2**
(45) Date of publication and mention of the opposition decision: **22.07.2026**
(45) Mention of the grant of the patent: 05.07.2023
(21) Application number: 19911284.8
(22) Date of filing: 28.06.2019
(51) Int. Cl.: H04L 9/40, H04L 67/12, G07F 17/20, B60S 3/04, G06Q 20/40

(54) **INTELLIGENT VEHICLE WASHING METHOD, VEHICLE WASHING MACHINE, SERVER, AND VEHICLE TERMINAL**
INTELLIGENTES FAHRZEUGWASCHVERFAHREN, FAHRZEUGWASCHMASCHINE, SERVER UND FAHRZEUGTERMINAL
PROCÉDÉ DE LAVAGE DE VÉHICULE INTELLIGENT, MACHINE DE LAVAGE DE VÉHICULE, SERVEUR ET TERMINAL DE VÉHICULE

(30) Priority: 21.01.2019 CN 201910053226
(43) Date of publication of application: 29.09.2021
(73) Proprietor: GUANGZHOU XIAOPENG MOTORS TECHNOLOGY CO., LTD., Guangzhou (CN)
(72) Inventor: LIU, Yu, Guangzhou, Guangdong 510000 (CN); LAI, Yi, Guangzhou, Guangdong 510000 (CN); LIU, Yanfei, Guangzhou, Guangdong 510000 (CN); WU, Xian, Guangzhou, Guangdong 510000 (CN); JIANG, Yi, Guangzhou, Guangdong 510000 (CN); SONG, Bo, Guangzhou, Guangdong 510000 (CN)
(74) Representative: Isarpatent
(86) International application number: PCT/CN2019/093458
(87) International publication number: WO 2020/151187

(56) References cited:
- WO-A1-2011/015877
- CN-A- 105 205 468
- CN-A- 106 274 833
- CN-A- 106 485 845
- CN-A- 109 050 481
- CN-A- 109 649 342
- CN-U- 205 292 570
- US-A1- 2014 052 312
- US-A1- 2016 244 029

## Description

### Field of Invention

The present invention relates to vehicle cleaning technology and, in particular, to a method of intelligent car wash, car washer, server and vehicle terminal.

### Background

As the number of private automobiles increases, the car washing industry has transitioned from conventional manual car washing to car washing by machines. This does not only represent a change of consumer habits, but also a new era of automation of the car washing industry. However, current car washing schemes using car washers are often inconvenient to use. For example, prior to car wash, a driver needs to perform a detailed inspection over the vehicle. If a window or door is not fully closed, water may find its way into the vehicle during car wash. While car wash is under way, the driver may need to constantly check progress of the current car washing service, so as to drive the vehicle away from the car washer in time after the car wash is completed. In such car washing schemes, the car washing service process can be cumbersome and demand significant level of drivers' attention, and accordingly user experience is poor.

CN109050481A discloses a control method, an apparatus and a system of a car washing machine; the method comprises: after a vehicle enters a predetermined car washing position, obtaining the identity identification information of the vehicle through a camera device arranged in the car washing room, and when the authentication of the user account corresponding to the identification information is successful, starting a car washing machine of the car washing house to wash the vehicle. US2016/244029 (A1) discloses a vehicle system that includes a processing device programmed to receive a first user input signal and activate a car wash mode in response to receiving the first user input signal.

US2014/052312 (A1) discloses a method for autonomously driving a motor vehicle in a car wash, the method comprises detecting a passageway of the car wash and determine with vehicle sensors the vehicle position and the vehicle orientation of the vehicle relative to the passageway.

### Summary of Invention

The present invention is directed to a method of intelligent car wash, associated car washers, servers, and vehicle terminals, which can simplify car washing processes and improve user experience. These are recited by the independent claims.

Compared to convention arts, the embodiments of the present invention can achieve the beneficial effects set out below.

The car washer may automatically detect whether a vehicle has been parked into the car washing area, and at the same time the server may authenticate the associated user account. After the vehicle has been parked into the car washing area and authentication of the user account has been successful, the server may trigger the vehicle terminal to perform an automatic inspection of the vehicle hardware devices; and when it detects that the hardware devices are in car washing preparation states, the car washer is caused to start a car washing service for the vehicle. Implementation of the embodiments of the present invention allows automatic detection of proper vehicle parking and inspection of vehicle hardware devices without manual operation of a user. In addition, authentication of user accounts can improve security and reliability of car wash transactions.

### Brief Description of Drawings

In order to clearly illustrate the technical solutions in the embodiments of the present invention, brief description of the drawings pertinent to the embodiments will be provided. It should be apparent to a skilled person in the art that the drawings described below are for the purpose of illustrating embodiments of the invention only. The skilled person will be able to devise further drawings based on the provided drawings without exercising any inventive efforts.
FIG. 1 is a schematic structural diagram of a car washing system according to an embodiment of the present invention;
FIG. 2 is a flowchart of a method of intelligent car wash according to an embodiment of the present invention;
FIG. 3 is a flowchart of another method of intelligent car wash;
FIG. 4 is an exemplary diagram of an interaction interface showing a lock-vehicle reminder;
FIG. 5 is an exemplary diagram of a display interface showing a hardware device detection state;
FIG. 6 is a flowchart of yet another method of intelligent car wash;
FIG. 7 is an exemplary diagram of a display interface showing progress of a car washing process;
FIG. 8 is an exemplary diagram of a display interface showing completion of a car washing process;
FIG. 9 is a schematic structural diagram of a vehicle terminal according to an embodiment of the present invention;
FIG. 10 is a schematic structural diagram of a server according to an embodiment of the present invention;
FIG. 11 is a schematic structural diagram of a car washer according to an embodiment of the present invention;
FIG. 12 is a schematic structural diagram of another car washing system according to an embodiment of the present invention.

### Detailed Description

The technical solutions in the embodiments of the invention will now be described clearly and completely with reference to the accompanying drawings. The described embodiments merely show some but not all possible ways for implementing the invention.

It is to be noted that terms "comprising," "including" and any equivalent variations thereof, used in this disclosure are intended to cover the listed matters non-exclusively. For example, a process, method, system, product, or device that comprises a series of steps or units is not meant to include the listed steps or units only, but may optionally include other steps or units not listed or any steps or units inherent to such a process, method, system, product, or device.

Embodiments of the present invention disclose a method of intelligent car wash, a car washer, a server and a vehicle terminal, which are capable of simplifying a car washing process and improve user experiences. Details are described below.

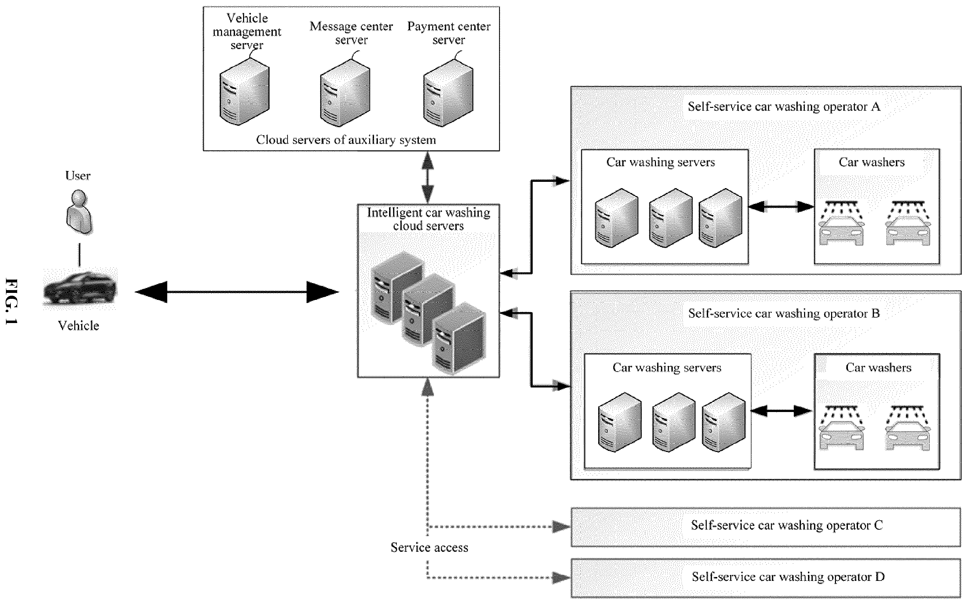

In order to facilitate understanding the internet-based car washing method, car washers, servers and vehicle terminals, the system architecture to which the embodiments of the present invention are applicable is first described below. FIG. 1 is a schematic structural diagram of a car washing system. The car washing system may include a car washer, a server, and a vehicle equipped with a vehicle terminal. The car washer, the server, and the vehicle terminal may transmit and receive data over wireless communication connections such as 5G networks, 4G networks, Wireless Local Area Networks (WLAN), Wide Area Networks (WAN) or Bluetooth connections. The servers may include a car washing server in the backend of a car washer, an intelligent car washing cloud server for an intelligent car washing platform, and cloud servers for an auxiliary system. The servers for the auxiliary system may include one or more of a vehicle management server for a vehicle management platform which stores vehicle information, a message center server for issuing and receiving messages, and a transaction server for processing payments. Car washers and servers in the backend of the car washers may belong to different car wash operators. Car washers and car washing servers belonging to the same car washer operators can be communicatively connected, and car washing servers belonging to different operators may be connected with an intelligent car washing cloud server of a car washing platform via a uniform interface.

### Embodiment 1

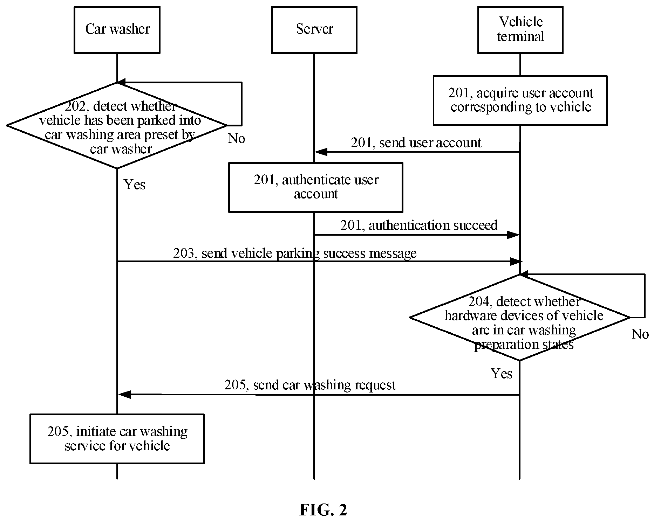

Reference is made to FIG. 2, which is flowchart of a method of intelligent car wash according to an embodiment of the present invention. The intelligent car washing method depicted in FIG. 2 is applicable to a car washing system as shown in FIG. 1. As shown in FIG. 2, the intelligent car washing method may include the steps described below.

201. The vehicle terminal acquires a user account corresponding to a vehicle and sends the user account to the server to cause the server to authenticate the user account.

In the embodiment of the present invention, the vehicle terminal may display a login page on its screen. A user may login via the login page using a pre-registered user account or by scanning a barcode displayed on the login page. Further, as an alternative embodiment, the vehicle terminal may also identify a user account corresponding to the vehicle based on the license plate or chassis number of the vehicle.

The server then authenticates the user account to verify whether the user account reported by the vehicle terminal is a legitimate account (i.e., a registered account). If the user account is a legitimate account, the user account may be deemed to have passed the authentication process, and the server may send a notification message to the vehicle terminal indicating that the authentication was successful. Further, if the user account is verified as a legitimate account, a service authorization message may also be sent to the vehicle terminal corresponding to the user account. If an authentication success message returned by the vehicle terminal in response to the service authorization message is detected, a decision can be made that the user account passed the authentication.

202. The car washer detects whether the vehicle has been parked into the car washing area preset by the car washer, and if yes, executes step 203 and, if not, continues with step 202.

In the embodiment of the invention, the car washing area is a designated work area in the car washer, and car washing tools of the car washer, such as water sprays, foam nozzles, brushes, dryers, etc., are all disposed towards the work area. When the vehicle is parked into the car washing area, the operation range of the car washing tools may cover the whole car in order to achieve good car washing results. Specifically, the car washer may detect whether the car enters the car washing area using an infrared detection device or a ground sensing device of the car washer, and execute subsequent car washing process after detecting that the vehicle enters a license plate identification area, such that satisfactory car washing effect may be achieved.

203. The car washer sends a vehicle parking success message to the server, which forwards the vehicle parking success message to the vehicle terminal.

204. The vehicle terminal detects whether the hardware devices of the vehicle are in car washing preparation states when the authentication is successful and the vehicle parking success message has been received, and if so, executes step 205 and, if not, continues with step 204.

In the embodiment of the present invention, the vehicle terminal may determine whether a notification message sent by the server indicating that the authentication was successful has been received, and if yes, may consider the authentication to be successful. Furthermore, in embodiments of the present invention, the hardware devices of the vehicle may include devices that may be electronically controlled, such as windows, rear-view mirrors, wipers, etc., as well as devices that not electronically controlled, such as doors, bonnet cover, trunk, charging port flap, etc. Specifically, car washing preparation states of the hardware devices described above may include closed state of windows, wipers, doors, bonnet cover, trunk, charging port flap, etc. and fold-up state of rear-view mirrors. By automatic checking of the vehicle hardware devices, the user does not need to spend a significant amount of effort to inspect the vehicle. Further, in the embodiment of the present invention, the car washing service is started after detecting that the hardware devices of the vehicle are in the car washing preparation states. This may ensure safety by reducing the likelihood of water finding its way into the vehicle during car wash.

When the vehicle terminal detects that any one of the hardware devices is not in the car washing preparation state, if the hardware device is a device that can be electronically controlled, the vehicle terminal can also directly control the device to transition to the car washing preparation state (such as switching off the wiper, folding up the rear-view mirrors), so that no manual operation by the user is required. Specifically, the automatic operations may include, inter alia: 1) closing the windows; 2) switching off the wipers; 3) folding up the rear-view mirrors; 4) switching the gear to "P".

205. The vehicle terminal sends a car washing request message to the server to cause the server to trigger the car washer to start a car washing service for the vehicle.

In the embodiment of the present invention, if a car washing request message is received, it means that authentication for the current car washing service has been successful, that the vehicle has been parked into the car washing area in the car washer, and that the hardware devices of the vehicle are in the car washing preparation states. Safe and efficient car wash can be performed by starting the car washing service at this time.

In the method of intelligent car wash illustrated in FIG. 2, the car washer may automatically detect whether the vehicle is parked into the car washing area, the server may authenticate the user account, and the vehicle terminal may automatically detect whether the hardware devices of the vehicle are in the car washing preparation states. When it is detected that the vehicle has been parked in the car washing area, authentication of the user account is successful, and the hardware devices of the vehicle are in the car washing preparation states, the car washing service for the vehicle is automatically started. The entire car washing process can be completed without manual operation of a user, and safe, efficient, and convenient car washing service can be provided to the user.

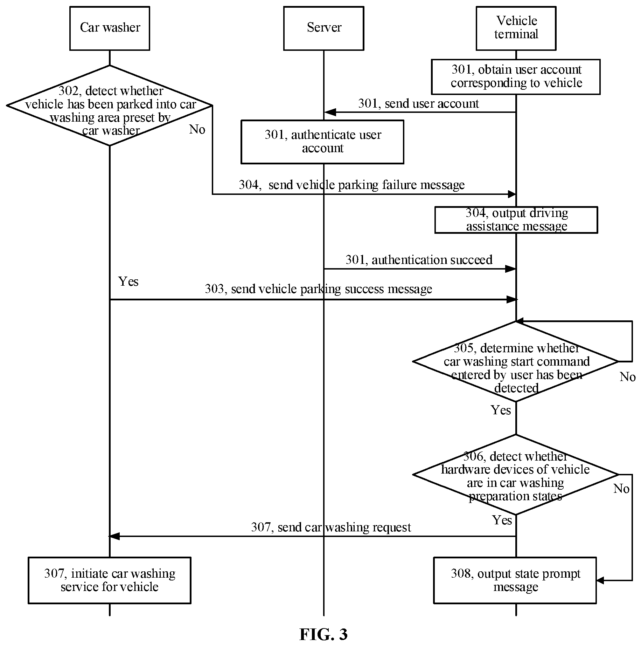

Reference is made to FIG. 3, which is a flowchart illustrating another method of intelligent car wash. The intelligent car washing method described in FIG. 3 is suitable for the car washing system as shown in FIG. 1. As shown in FIG. 3, the intelligent car washing method may include the steps set out below.

301. The vehicle terminal obtains a user account corresponding to the vehicle and sends the user account to the server to cause the server to authenticate the user account.

After successful authentication of the user account, the server may cause the vehicle terminal to output and display real-time 360° images captured by surround view cameras of the vehicle and to play an audio reminder message to assist the user to drive the vehicle to the car washing area. The vehicle's surround view cameras are cameras installed on the periphery of the vehicle.

302. The car washer detects whether the vehicle has been parked into the car washing area preset by the car washer, and if yes, executes step 303 and, if not, proceeds to step 304.

303. The car washer sends a vehicle parking success message to the server, which forwards the vehicle parking success message to the vehicle terminal.

304. The car washer sends a vehicle parking failure message to the server, which forwards the vehicle parking failure message to the vehicle terminal; and the vehicle terminal outputs a driving assistance message to guide the user to control the vehicle to travel to the car washing area when receiving the vehicle parking failure message.

The vehicle parking failure message may contain specific location information indicating whether the vehicle has not yet reached or passed the car washing area. The vehicle terminal may output a driving assistance message corresponding to the specific location information to prompt the user to drive forward or backward so as to assist the user to park the vehicle into the car washing area. Compared to parking guidance by way of human observation, automatic detection of the parking position of the vehicle by the car washer can reduce human error, provide more accurate driving assistance to the user, and improve efficiency of the parking operation.

Additionally, indicator lights may also be provided within the car washer. The indicator lights may have at least three display states: a first state for reminding the user to drive forward; a second state for reminding the user to reverse; and a third state for informing the user that the vehicle has been parked in place. The first state may be shown by a green forward arrow, the second state may be shown as a red word "Back", and the third state may be a red word "Park". The car washer may also provide a driver with a driving assistance message by adjusting status of the indicator lights, when it is detected that the vehicle is not in the car washing area, to assist the user to park the vehicle into the car washing area.

305. When the authentication of the user account is successful and a vehicle parking success message has been received, the vehicle terminal may determine whether a car washing start command entered by the user has been detected, and if yes, proceed to step 306, if no, continue to execute step 305.

The vehicle terminal may detect a car washing start command entered by a user by way of 1) operating a touch screen input of the vehicle terminal, or 2) a mobile device communicatively connected with the vehicle terminal, wherein the mobile device may be an electronic key of the vehicle, a smart phone of the user, or the like.

Further, the following car washing modes may be supported: on-board wash (i.e., the user remains inside the car during car wash) and off-board wash (i.e., the user gets off and stays outside during car wash). If the current target car washing mode is on-board wash, then the vehicle terminal may determine whether a car washing start command is entered by the user by operating the touch screen input of the vehicle terminal. That is, the user may directly click on the touch screen in the vehicle to enter a car washing start command while the user is inside the vehicle. If the current target car washing mode is off-board car wash, then the vehicle terminal may determine whether a car washing start command is entered by the user through the mobile device communicatively connected with the vehicle terminal. That is, the user may remotely enter a car washing start command via a mobile device such as an electronic key or a smart phone while the user is outside the vehicle.

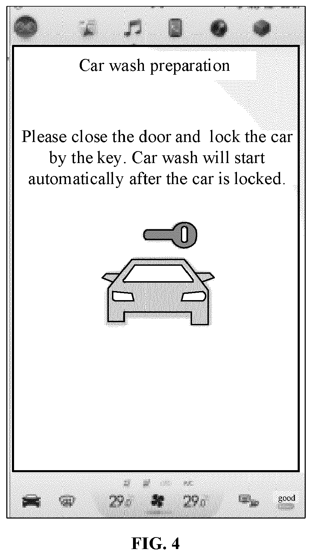

If the current target car washing mode is off-board wash, the vehicle terminal may consider that the user has entered a car washing start command upon detection of a lock-vehicle command entered by the user through a mobile terminal such as an electronic key or a smart phone. In other words, the lock-vehicle command may serve as a car washing start command while the current car washing mode is off-board car wash. Further, the vehicle terminal or a mobile device in communication with the vehicle terminal, such as a smart phone, may output a diagram of an interaction interface showing a lock-vehicle reminder as shown in FIG. 4, to remind the user to lock the vehicle via the interaction interface, so as to automatically trigger a car washing start command and to execute the subsequent car washing process.

Additionally, if it has been detected that the authentication is successful and the vehicle parking success message is received, the vehicle terminal may also output a parking reminder message to remind the user to control the vehicle to enter a parking state. The parking state may be that the transmission gear is at "P" and/or a hand brake is applied. Further optionally, the vehicle terminal may also detect whether the vehicle has entered the parking state, and if so, perform the step of determining whether a user entered car washing start command is detected.

306. The vehicle terminal detects whether the hardware devices of the vehicle are in the car washing preparation states, and if yes, executes step 307, and if no, executes step 308.

307. The vehicle terminal sends a car washing request message to the server to cause the server to trigger the car washer to start a car washing service for the vehicle.

308. The vehicle terminal outputs a status alert message.

The vehicle terminal may output the status alert message in different ways according to different car washing mode.

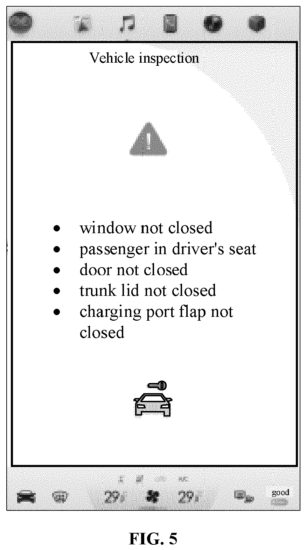

If the target car washing mode is on-board wash, upon detecting that any hardware device is not in the car washing preparation state, information of the hardware device not in car washing preparation state is output for display. Reference is made to FIG. 5, which is an exemplary diagram of a display interface showing a hardware device detection state. As shown in FIG. 5, the vehicle terminal may display information of the hardware devices not in the car washing preparation states one by one on the display interface, and display the current status of each hardware device to remind the user to perform a manual check or to manually transition the hardware devices not in the car washing preparation states to the car washing preparation states. Alternatively, the vehicle terminal may also report hardware devices not in the car washing preparation states via audio alerts. The present invention is not limited to any particular way for alerting users of hardware devices not in the car washing preparation states.

If the target car washing mode is off-board wash, upon detecting that any hardware device is not in the car washing preparation state, the horn of the vehicle is controlled to sound and/or lights of the vehicle are controlled to flash. When the user is outside the vehicle, status alert messages in the form of a horn sound and light flash may attract the user's attention more effectively, so as to remind the user to check status of the hardware devices.

In the method depicted in FIG. 3, detection of proper vehicle parking (i.e., parking in the car washing area), parking guidance, detection of status of hardware devices, and start of car washing service may be performed automatically. It is also possible to provide different measures for entering car washing start commands for different car washing modes to allow a user to conveniently activate car washing service regardless of whether the user is on board or outside the vehicle. Additionally, different manners for alerting hardware device status may also be provided for different car washing modes, such that the user may notice that certain hardware devices are not in the car washing preparation states in a timely manner.

### Embodiment 3

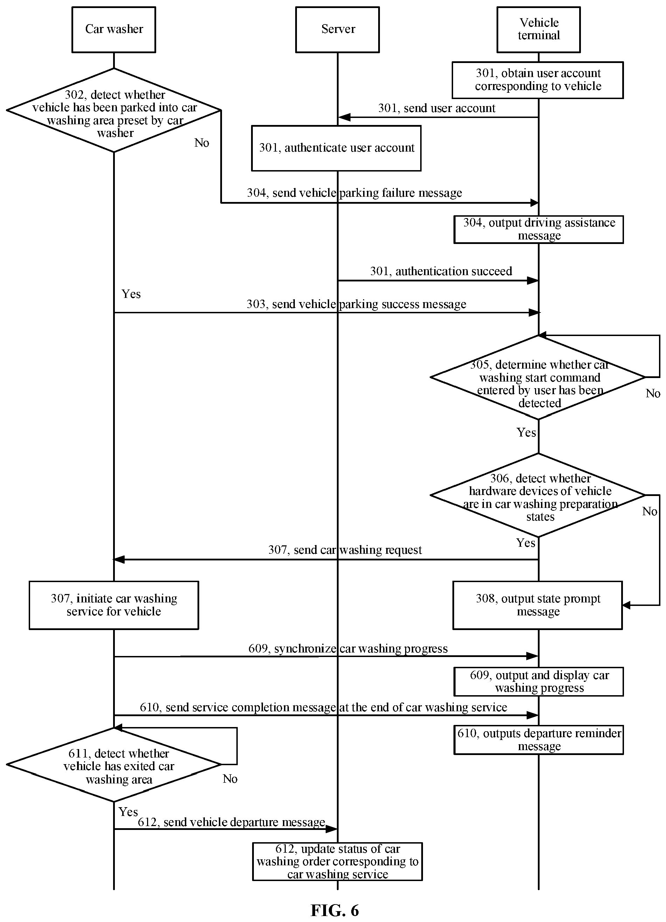

Reference is made to FIG. 6, which is a flowchart illustrating yet another method of intelligent car wash. The method of intelligent car wash depicted in FIG. 6 is suitable for a car washing system as shown in FIG. 1. As shown in FIG. 6, the method of intelligent car wash may include the steps set out below.

Steps 601-608 are identical to steps 301-308 described above and are not repeated herein.

609. The vehicle terminal obtains car washing progress information from the server and displays the information during the car washing service.

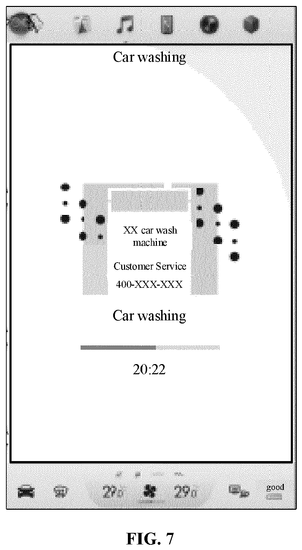

The car washer may report car washing progress of the car washing service to the server, which may push the car washing progress information to the vehicle terminal periodically or as events. The car washing progress information may include information of the current car washing phase, such as high-pressure water spray, foam application, rinsing and scrubbing, wax application and drying, and remaining time for the current car washing service, etc. Specifically, the server may push the total service time of the current car washing service to the vehicle terminal, which may count down based on the total service time and outputs the result for display. Please refer to FIG. 7, which is an exemplary diagram of a display interface showing progress of a car washing process. As shown in FIG. 7, information of the operator of the car washer, the remaining car washing time, etc. can be displayed on the display interface. The total service time for the car washing service may be calculated in real time based on the car washing service package corresponding to the current car washing service and the vehicle model. While displaying the car washing progress as shown in FIG. 7, the vehicle terminal may also output safety notes that the user needs to be aware of.

610. The vehicle terminal outputs a departure reminder message to remind the user to drive the vehicle away when the car washing service is completed.

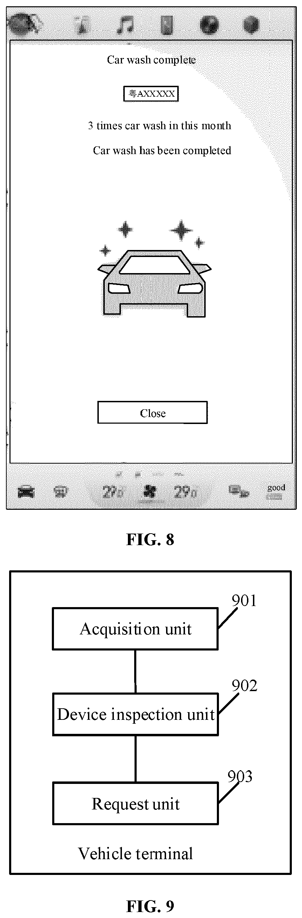

The car washer may send a service completion message to the server at the end of the car washing service, and the server may forward the service completion message to the vehicle terminal. Please refer to FIG. 8, which is an exemplary diagram of a display interface showing completion of a car washing process. When the vehicle terminal receives the service completion message, it may switch the display from the car washing progress display interface as shown in FIG. 7 to the car washing completion display interface as shown in FIG. 8. In another alternative embodiment, upon completion of the countdown shown in FIG. 7, if the vehicle terminal has not received a service completion message within a certain period of time (e.g., 30 seconds), the vehicle terminal may automatically switch the display to the car washing completion display interface as shown in FIG. 8 so as to remind the user to drive away even if the service completion message is not received timely due to various reasons such as network congestion.

Further, when the car washing service is completed, the vehicle terminal may transition the electronically controlled hardware devices to their normal operational states, such as unfolding the rear-view mirrors. If the current target car washing mode is on-board wash, the vehicle terminal may deploy the rear-view mirrors and other hardware devices immediately upon detecting completion of the car washing service. If the current target car washing mode is off-board wash, the vehicle terminal may perform the transition of the hardware devices to their normal operational states, such as unfolding the rear-view mirrors, after detection of the user unlocking the vehicle.

611. The car washer detects whether the vehicle has exited the car washing area, and if yes, executes step 612 and, if not, continues with step 611.

The car washer may detect whether the vehicle has been driven away from the car washing area by way of an infrared detection device or a ground sensing device. Optionally and additionally, the vehicle terminal may also display real-time 360° images captured by the surround view cameras of the vehicle and play audio reminder messages to assist the user to drive the vehicle away from the car washing area.

612. The car washer sends a vehicle departure message to the server to cause the server to update the status of a car washing order corresponding to the car washing service upon receipt of the vehicle departure message.

The server may update the status of the car washing order as the service has been completed and record the time when the vehicle exits the car washing area or the car washer as the end time of the present car washing service, and save the information as local data for subsequent verification. The present invention is not limited by any particular way of order status update and recordal.

In the method of intelligent car wash illustrated in FIG. 6, prior to start of the car washing service, detection of proper vehicle parking, parking guidance, inspection of vehicle hardware devices, etc. may be performed automatically; in the course of the car washing service, car washing progress may be synchronized and displayed to the user; at the end of the car washing service, the user may be reminded to drive the vehicle away from the car washing area; and after the vehicle exits the car washing area, completion of the present car washing service is recorded. In the whole car washing process from vehicle entering the car washer to vehicle exiting the car washer, safe, efficient, and convenient car washing service is provided throughout, and user experiences are greatly improved by the interaction in the process.

Reference is made to FIG. 9, which is a schematic structural diagram of a vehicle terminal according to an embodiment of the present invention. As shown in FIG. 9, the vehicle terminal may include the units set out below.

An acquisition unit 901 is configured to acquire a user account corresponding to a vehicle and send the user account to the server to cause the server to authenticate the user account.

The acquisition unit 901 may acquire the user account entered by the user through the login page or the user account used by the user by scanning the barcode on the login page. Alternatively, the acquisition unit 901 may identify a user account corresponding to the vehicle based on the license plate or the chassis number of the vehicle. The acquisition unit 901 may trigger a device inspection unit 902 after it sends the user account to the serving device.

The device inspection unit 902 is configured to detect whether hardware devices of the vehicle are in car washing preparation states, when authentication of the user account is successful and a vehicle parking success message has been received. The vehicle parking success message is a message sent by the car washer through the server upon detecting that the vehicle has been parked in a car washing area preset by the car washer.

A request unit 903 is configured to send a car washing request message to the server to cause the server to trigger the car washer to start a car washing service for the vehicle when the device inspection unit 902 detects that the hardware devices are in the car washing preparation states.

Optionally, the vehicle terminal shown in FIG. 9 may also include (not illustrated in the drawings) an interaction unit configured to:
output a driving assistance message to guide a user to control the vehicle to travel to a car washing area upon receipt of a vehicle parking failure message, wherein the vehicle parking failure message is a message sent by the car washer through the server upon detection of the vehicle entering the car washer but failing to park in the car washing area; and
output a parking reminder message to remind the user to control the vehicle to enter a parking state upon receipt of the vehicle parking success message.

The driving assistance message may be used to direct the user to drive forward or backward in order to assist the user to park the vehicle into the car washing area.

The vehicle terminal may further include a judgement unit for determining whether a car washing start command entered by the user is detected.

The device inspection unit described above is configured to detect whether the hardware devices of the vehicle are in the car washing preparation states, when authentication of the user account is successful, a vehicle parking success message has been received, and the judgement unit detects the car washing start command.

In a preferred embodiment, the judgement unit may be configured to determine whether a car washing start command entered by a user through a touch screen of the vehicle terminal is detected if the target car washing mode is on-board wash, or to determine whether a car washing start command entered by the user through a mobile device communicatively connected with the vehicle terminal is detected if the target car washing mode is off-board wash, the mobile device being an electronic key of the vehicle, a smart phone of the user, or the like.

In another preferred embodiment, the device inspection unit may also detect whether the vehicle has entered a parking state before detecting whether the hardware devices of the vehicle are in the car washing preparation states, and if the vehicle has entered the parking state, perform the operation of determining whether a car washing start command entered by the user has been detected.

The interaction unit described above may be configured to, when the target car washing mode is on-board wash and the device inspection unit detects that any of the hardware devices is not in the car washing preparation state, output and display information of the hardware device not in the car washing preparation state, and when the target car washing mode is off-board wash and the device inspection unit detects that any of the hardware devices is not in the car washing preparation state, control the horn of the vehicle to sound and/or control the lights of the vehicle to flash. That is, upon detection that any hardware device is not in the car washing preparation states, the interaction unit may output status alert messages in different forms according to different car washing modes.

In addition, the interaction unit described above, may also be configured to obtain car washing progress information of the car washer from a server and output the information for display in the course of car washing service, and output a departure reminder message to remind the user to drive the vehicle away at the end of the car washing service.

In summary, the vehicle terminal shown in FIG. 9 can automatically perform hardware device inspection after the vehicle is parked into the car washing area so that the car washing service may be activated when the hardware devices are in the car washing preparation states. In addition, when the vehicle is not parked in the car washing area, the vehicle terminal may also output a driving assistance message to assist the user to park the vehicle into the car washing area, and when it is detected that any hardware device is not in the car washing preparation state, output a status alert message to remind the user to check the hardware device of the vehicle. Further, the vehicle terminal can detect car washing start commands entered by the user in different ways (touch screen, electronic key, smart phone, etc.) depending on different car washing modes, and choose different means for outputting status alert messages depending on different car washing modes to decrease the likelihood of the user ignoring the state prompt messages, to provide a friendly way for user interaction, and to improve user experiences.

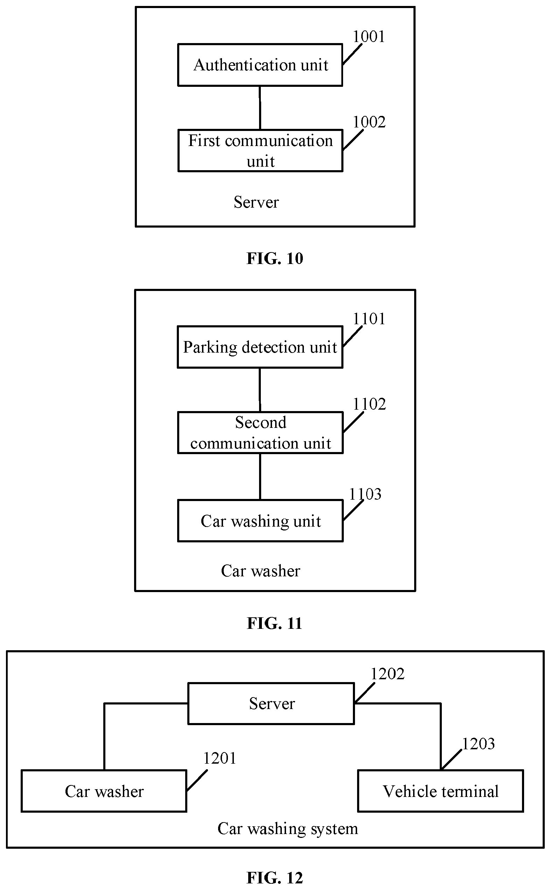

Reference is made to FIG. 10, which is a schematic structural diagram of a server according to an embodiment of the present invention. As shown in FIG. 10, the server may include the elements set out below.

An authentication unit 1001 is configured to acquire a user account sent by a vehicle terminal and authenticate the user account. In particular, the authentication unit 1001 may verify whether the user account reported by the vehicle terminal is a legitimate account, and if the user account is a legitimate account, may consider the user account to have pass the authentication, and the server may send a notification message to the vehicle terminal indicating that the authentication was successful. Further, if the user account is verified as a legitimate account, the authentication unit 1001 may also send a service authorization message to the vehicle terminal corresponding to the user account, and If an authentication success message returned by the vehicle terminal in response to the service authorization message is detected, a decision can be made that the user account passed the authentication.

A first communication unit 1002 is configured to cause the vehicle terminal to check whether hardware devices of the vehicle are in car washing preparation states when the authentication unit 1001 has successfully authenticated the user account and a vehicle parking success message has been received, and to cause the car washer to start a car washing service for the vehicle upon receipt of a car washing request message sent by the vehicle terminal, wherein the vehicle parking success message is a message sent by a car washer upon detecting that the vehicle has been parked in a car washing area preset by the car washer, and the car washing request message is a message sent by the vehicle terminal when it is detected that the hardware devices are in the car washing preparation states.

In addition, the first communication unit 1002 described above may also be configured to receive the car washing progress information reported by the car washer and forward the information to the vehicle terminal to cause the vehicle terminal to output and display the car washing progress information, to receive a service completion message sent by the car washer at the end of the car washing service and forward the service completion message to the vehicle terminal so that the vehicle terminal may output a departure reminder message to remind the user to drive the vehicle away when the service completion message is received, and when receiving a vehicle departure message sent by the car washer upon detection of the vehicle exiting from the car washing area, to update the status of the car washing order corresponding to the car washing service in accordance with the vehicle departure message.

The server shown in FIG. 10 may authenticate user accounts and trigger a car washer to activate car washing service after the authentication is successful, thereby improving safety and reliability of the car washing service. In addition, the server may also synchronize car washing progress of the car washing service between the car washer and the vehicle terminal, notify the vehicle terminal of completion of the car washing service, and update order status when the vehicle departs from the car washer to end the whole car washing process. This provides background support for the interactive experience provided by the vehicle terminal.

Reference is made to FIG. 11, which is a schematic structural diagram of a car washer according to an embodiment of the present invention. As shown in FIG. 11, the car washer may include the elements described below.

A parking detection unit 1101 is configured to detect whether a vehicle has been parked in a car washing area preset the car washer.

The parking detection unit 1101 may detect whether a vehicle has been parked into the car washing area by an infrared detection device or a ground sensing device. Optionally, the parking detection unit 1101 may also be used to detect whether the vehicle has been driven away from the car washing area.

A second communication unit 1102 is configured to send a vehicle parking success message to a server, when the parking detection unit 1101 detects that the vehicle has been parked in the car washing area, to cause the server, when authentication of a user account corresponding to the vehicle by the server is successful, to trigger a vehicle terminal to check whether hardware devices of the vehicle are in car washing preparation states based on the vehicle parking success message. Optionally, the second communication unit 1102 may be further configured to send a vehicle parking failure message to the server to trigger the vehicle terminal to output a driving assistance message for guiding the user to control the vehicle to park into the car washing area when the parking detection unit 1101 detects that the vehicle has not been parked in the car washing area. The second communication unit 1102 may trigger start of a car washing unit 1103 after sending the vehicle parking success message to the server.

The car washing unit 1103 is configured to start a car washing service for the vehicle upon receipt of a car washing request message sent by the server, the car washing request message being a message sent by the vehicle terminal through the server upon detecting that the hardware devices of the vehicle are in the car washing preparation states.

In addition, in a preferred embodiment, the second communication unit 1102 described above may be further configured to report car washing progress information of the car washing service to the server in real time in the course of the car washing service to cause the server to synchronize the car washing progress information to the vehicle terminal for display; at the end of the car washing service, to send a service completion message to the server to cause the server to trigger the vehicle terminal to output a departure reminder message to remind the user to drive the vehicle away; and, when the parking detection unit 1101 detects that the vehicle has exited the car washing area, to send a vehicle departure message to the server to cause the server to update status of the car washing order corresponding to the car washing service upon receipt of the vehicle departure message.

The car washer shown in FIG. 10 may automatically detect whether the vehicle is parked in place (i.e., in the car washing area), and by communication with the server and the vehicle terminal, when the vehicle is not parked in place, output a driving assistance message through the vehicle terminal to assist the user to park the vehicle into the car washing area. In addition, the car washer may also synchronize car washing progress in real time and notify completion of the car washing service in time. Further, the car washer may also automatically detect whether the vehicle has been driven away from the car washing area to allow the server to update the order status in time and to complete the entire car washing process.

Reference is made to FIG. 12, which is a schematic structural diagram of another car washing system according to an embodiment of the present invention. The car washing system shown in FIG. 12 may include a car washer 1201, a server 1202, and a vehicle terminal 1203.

The car washer 1201 may perform some or all of the operations performed by the car washer in embodiment 6; the server 1202 may perform some or all of the operations performed by the server in embodiment 5; and the vehicle terminal 1203 may perform some or all of the operations performed by the vehicle terminal in embodiment 4.

There is provided a computer-readable storage medium storing a computer program which, when executed, causes a computer to perform the method of intelligent car wash shown in any of FIGS. 2, 3 and 6.

There is provided a computer program product comprising a non-transitory computer-readable storage medium storing a computer program which, when executed, causes a computer to perform the method of intelligent car wash shown in any of FIGS. 2, 3, and 6.

It should be understood that references throughout the specification to "one embodiment" or "an embodiment" mean that a particular feature, structure, or characteristic described in connection with the embodiment is included in at least one embodiment of the present invention. Thus, the phrases "in one embodiment" or "in an embodiment" used in various passages throughout this specification are not necessarily all referring to the same embodiment. Furthermore, the particular features, structures, or characteristics may be combined in any suitable manner in one or more embodiments It should also be appreciated by those skilled in the art that the embodiments described in the specification are merely preferred embodiments and that the actions and modules involved are not necessarily required by the present invention.

In various embodiments of the present invention, it should be understood that the order of the sequence numbers of the processes described above is not meant to imply the necessary ordering in which the processes are performed. Rather the ordering of the processes should be determined by their functions and inherent logics. The order of the sequence numbers should not be construed as any limitation on the scope of the embodiments of the present invention.

The units described above as separate components may or may not be physically separate, components illustrated as units may or may not be physical units, and they be present in one place or distributed across multiple network units. Some or all of the units may be selected in accordance with actual needs in order to achieve the purpose of the embodiments of the disclosure.

Furthermore, the various functional units may be integrated in one processing unit, or may physically exist as separate units, or two or more units may be integrated in one unit. The aforementioned integrated units may be implemented in the form of hardware or software functional units

The aforementioned integrated units may be stored in a computer accessible memory when implemented in the form of a software functional units and sold or used as a standalone product. Based on such understanding, the technical solution of the present invention in essence, or all or part of the technical solution that contributes to the state of the art, may be embodied in the form of a software product. The software product may be stored on a memory device and includes a number of requests to cause a computer device (which may be a personal computer, server, or network device, or the like, particularly a processor in a computer device) to perform some or all of the steps of the methods of the various embodiments of the invention as described above.

Those of ordinary skills in the art will appreciate that all or some of the steps of the various methods of the embodiments described above may be accomplished by relevant hardware under instructions of a computer program. The computer program may be stored in a computer-readable storage medium such as read-only memory (ROM), random-access memory (RAM), programmable read-only memory (PROM), erasable programmable read-only memory (EPROM), one-time programmable read-only memory (OTPROM), electrically erasable programmable read-only memory (EEPROM), compact-disc read-only memory (CD-ROM) or other optical disk storage device, magnetic disk storage device, magnetic tape storage device, or any other medium that can be used to carry or store data.

The present invention has been described in detail with respect to a method of intelligent car wash, a car washer, a server and a vehicle terminal. While specific examples have been described herein to illustrate the principles and embodiments of the invention, the description of the examples is provided solely to facilitate understanding of the principles of the invention and its core concept. The scope of the invention is defined by the claims.

## Claims

1. A method of intelligent car wash, comprising:
acquiring (201, 301), by a vehicle terminal, a user account corresponding to a vehicle and sending the user account to a server to cause the server to authenticate the user account;
checking (204, 306), by the vehicle terminal, whether hardware devices of the vehicle are in car washing preparation states when a notification message and a vehicle parking success message have been received, the vehicle parking success message being a message sent by a car washer through the server upon detecting that the vehicle has been parked in a car washing area preset by the car washer, the notification message indicating that the authentication is successful;
if any one of the hardware devices of the vehicle is not in the car washing preparation state and is a device that can be electronically controlled, controlling, by the vehicle terminal, the hardware device to transition to the car washing preparation state; and
if the hardware devices are in the car washing preparation states, sending (205, 307), by the vehicle terminal, a car washing request message to the server to cause the server to trigger the car washer to start a car washing service for the vehicle.

2. A method of intelligent car wash executed by a system comprising a server, a vehicle terminal and a car washer, comprising:
the server acquiring (201, 301) a user account sent by the vehicle terminal and authenticating the user account;
if the authentication is successful and a vehicle parking success message has been received, sending, to the vehicle terminal, a notification message and the vehicle parking success message for causing the vehicle terminal to check whether hardware devices of the vehicle are in car washing preparation states and, if any one of the hardware devices of the vehicle is not in the car washing preparation state and is a device that can be electronically controlled, to control the hardware device to transition to the car washing preparation state, wherein the vehicle parking success message is a message sent by the car washer upon detecting that the vehicle has been parked in a car washing area preset by the car washer, and the notification message indicates that the authentication is successful; and
upon receipt of a car washing request message sent by the vehicle terminal, causing the car washer to start a car washing service for the vehicle, the car washing request message being a message sent by the vehicle terminal when it is detected that the hardware devices are in the car washing preparation states.

3. A method of intelligent car wash executed by a system comprising a car washer, a vehicle terminal and a car washer, comprising:
the car washer detecting (202, 302) whether a vehicle has been parked in a car washing area preset by the car washer;
if the vehicle has been parked in the car washing area, sending (203, 303), to the server, a vehicle parking success message for causing the server, when authentication of a user account corresponding to the vehicle by the server is successful and the vehicle parking success message has been received, to send to the vehicle terminal a notification message and the vehicle parking success
message for triggering the vehicle terminal to check whether hardware devices of the vehicle are in car washing preparation states and, if any one of the hardware devices of the vehicle is not in the car washing preparation state and is a device that can be electronically controlled, to control the hardware device to transition to the car washing preparation state, wherein the notification message indicates that the authentication is successful; and
upon detection of a car washing request message, starting (205, 307) a car washing service for the vehicle, the car washing request message being a message sent by the vehicle terminal through the server upon detecting that the hardware devices of the vehicle are in the car washing preparation states.

4. A vehicle terminal (1203), comprising:
an acquisition unit (901) configured to acquire a user account corresponding to a vehicle and to send the user account to a server to cause the server to authenticate the user account;
a device inspection unit (902) configured to check whether hardware devices of the vehicle are in car washing preparation states when a notification message and a vehicle parking success message have been received, the vehicle parking success message being a message sent by a car washer through the server upon detecting that the vehicle has been parked in a car washing area preset by the car washer, the notification message of the authentication is successful, wherein if any one of the hardware devices of the vehicle is not in the car washing preparation state and is a device that can be electronically controlled, the hardware device is controlled to transition to the car washing preparation state; and
a request unit (903) configured to send a car washing request message to the server to cause the server to trigger the car washer to start a car washing service for the vehicle when the hardware devices are in the car washing preparation states.

5. A system comprising a server (1202), a vehicle terminal and a car washer, comprising: the server (1202) comprising
an authentication unit (1001) configured to acquire a user account sent by a vehicle terminal and authenticate the user account; and
a first communication unit (1002) configured to:
send to the vehicle terminal, if the authentication is successful and a vehicle parking success message has been received, a notification message and the vehicle parking success message for causing the vehicle terminal to check whether hardware devices of the vehicle are in car washing preparation states and, if any one of the hardware devices of the vehicle is not in the car washing preparation state and is a device that can be electronically controlled, to control the hardware devices to transition to the car washing preparation state, and
the server is adapted to cause the car washer to start a car washing service for the vehicle upon receipt of a car washing request message sent by the vehicle terminal, wherein
the vehicle parking success message is a message sent by the car washer upon detecting that the vehicle has been parked in a car washing area preset by the car washer, and the notification message indicates that the authentication is successful, and
the car washing request message is a message sent by the vehicle terminal when it is detected that the hardware devices are in the car washing preparation states.

6. A system comprising a car washer (1201), a server (1202) and a vehicle terminal, car washer (1201), comprising:
the car washer comprising a parking detection unit (1101) configured to detect whether a vehicle has been parked in a car washing area preset by the car washer;
a second communication unit (1102) configured to:
send to the server, when the parking detection unit detects that the vehicle has been parked in the car washing area, a vehicle parking success message for causing the server, when authentication of a user account corresponding to the vehicle by the server is successful, to send to the vehicle terminal a notification message and the vehicle parking success message for triggering a vehicle terminal to check whether hardware devices of the vehicle are in car washing preparation states and, if any one of the hardware devices of the vehicle is not in the car washing preparation state and is a device that can be electronically controlled, to control the hardware device to transition to the car washing preparation state, wherein the notification message indicates that the authentication is successful; and
a car washing unit (1103) configured to start a car washing service for the vehicle upon receipt of a car washing request message sent by the server, the car washing request message being a message sent by the vehicle terminal through the server upon detecting that the hardware devices of the vehicle are in the car washing preparation states.

## Patentansprüche

1. Verfahren zur intelligenten Fahrzeugwäsche, umfassend:
das Erfassen (201, 301), durch ein Fahrzeugterminal, eines einem Fahrzeug zugeordneten Benutzerkontos und das Senden des Benutzerkontos an einen Server, um den Server zur Authentifizierung des Benutzerkontos zu veranlassen;
das Prüfen (204, 306), durch das Fahrzeugterminal, ob sich Hardwarevorrichtungen des Fahrzeugs in Waschbereitschaftszuständen befinden, wenn eine Benachrichtigungsnachricht und eine Fahrzeugparkerfolgsnachricht empfangen worden sind, wobei die Benachrichtigungsnachricht anzeigt, dass die Authentifizierung erfolgreich ist, und wobei die Fahrzeugparkerfolgsnachricht eine Nachricht ist, die von einer Fahrzeugwaschanlage über den Server gesendet wird, wenn erkannt wird, dass das Fahrzeug in einem von der Fahrzeugwaschanlage vorgegebenen Waschbereich geparkt worden ist;
wenn eine der Hardwarevorrichtungen des Fahrzeugs sich nicht im Waschbereitschaftszustand befindet und eine elektronisch steuerbare Vorrichtung ist, das Steuern der Hardwarevorrichtung durch das Fahrzeugterminal, um die Hardwarevorrichtung in den Waschbereitschaftszustand zu überführen; und
wenn sich die Hardwarevorrichtungen in den Waschbereitschaftszuständen befinden, das Senden (205, 307), durch das Fahrzeugterminal, einer Waschanforderungsnachricht an den Server, um den Server zu veranlassen, die Fahrzeugwaschanlage zum Starten eines Waschdienstes zu veranlassen.

2. Verfahren zur intelligenten Fahrzeugwäsche, ausgeführt durch ein System, das einen Server, ein Fahrzeugterminal und eine Fahrzeugwaschanlage umfasst, umfassend:
das Erfassen (201, 301) eines von dem Fahrzeugterminal gesendeten Benutzerkontos durch den Server und das Authentifizieren des Benutzerkontos;
wenn die Authentifizierung erfolgreich ist und eine Fahrzeugparkerfolgsnachricht empfangen worden ist, das Senden einer Benachrichtigungsnachricht und der Fahrzeugparkerfolgsnachricht an das Fahrzeugterminal, um das Fahrzeugterminal zu veranlassen, zu prüfen, ob sich Hardwarevorrichtungen des Fahrzeugs in Waschbereitschaftszuständen befinden, und, wenn eine der Hardwarevorrichtungen des Fahrzeugs sich nicht im Waschbereitschaftszustand befindet und eine elektronisch steuerbare Vorrichtung ist, die Hardwarevorrichtung zu steuern, um sie in den Waschbereitschaftszustand zu überführen, wobei die Fahrzeugparkerfolgsnachricht eine Nachricht ist, die von der Fahrzeugwaschanlage gesendet wird, wenn erkannt wird, dass das Fahrzeug in einem von der Fahrzeugwaschanlage vorgegebenen Waschbereich geparkt worden ist, und wobei die Benachrichtigungsnachricht anzeigt, dass die Authentifizierung erfolgreich ist; und
das Veranlassen der Fahrzeugwaschanlage, einen Waschdienst für das Fahrzeug zu starten, bei Empfang einer von dem Fahrzeugterminal gesendeten Waschanforderungsnachricht, wobei die Waschanforderungsnachricht eine Nachricht ist, die von dem Fahrzeugterminal gesendet wird, wenn erkannt wird, dass sich die Hardwarevorrichtungen in den Waschbereitschaftszuständen befinden.

3. Verfahren zur intelligenten Fahrzeugwäsche, ausgeführt durch ein System, das eine Fahrzeugwaschanlage, ein Fahrzeugterminal und einen Server umfasst, umfassend:
das Erkennen (202, 302), durch die Fahrzeugwaschanlage, ob ein Fahrzeug in einem von der Fahrzeugwaschanlage vorgegebenen Waschbereich geparkt worden ist;
wenn das Fahrzeug in dem Waschbereich geparkt worden ist, das Senden (203, 303) einer Fahrzeugparkerfolgsnachricht an den Server, um den Server zu veranlassen, bei erfolgreicher Authentifizierung eines dem Fahrzeug zugeordneten Benutzerkontos und bei Empfang der Fahrzeugparkerfolgsnachricht, an das Fahrzeugterminal eine Benachrichtigungsnachricht und die Fahrzeugparkerfolgsnachricht zu senden, um das Fahrzeugterminal zu veranlassen, zu prüfen, ob sich Hardwarevorrichtungen des Fahrzeugs in Waschbereitschaftszuständen befinden, und, wenn eine der Hardwarevorrichtungen des Fahrzeugs sich nicht im Waschbereitschaftszustand befindet und eine elektronisch steuerbare Vorrichtung ist, die Hardwarevorrichtung zu steuern, um sie in den Waschbereitschaftszustand zu überführen, wobei die Benachrichtigungsnachricht anzeigt, dass die Authentifizierung erfolgreich ist; und
das Starten (205, 307) eines Waschdienstes für das Fahrzeug durch die Fahrzeugwaschanlage, bei Erkennung einer Waschanforderungsnachricht, wobei die Waschanforderungsnachricht eine Nachricht ist, die von dem Fahrzeugterminal über den Server gesendet wird, wenn erkannt wird, dass sich die Hardwarevorrichtungen des Fahrzeugs in den Waschbereitschaftszuständen befinden.

4. Fahrzeugterminal (1203), umfassend:
eine Erfassungseinheit (901), die dazu eingerichtet ist, ein einem Fahrzeug zugeordnetes Benutzerkonto zu erfassen und das Benutzerkonto an einen Server zu senden, um den Server zur Authentifizierung des Benutzerkontos zu veranlassen;
eine Geräteprüfeinheit (902), die dazu eingerichtet ist, zu prüfen, ob sich Hardwarevorrichtungen des Fahrzeugs in Waschbereitschaftszuständen befinden, wenn eine Benachrichtigungsnachricht und eine Fahrzeugparkerfolgsnachricht empfangen worden sind, wobei die Fahrzeugparkerfolgsnachricht eine Nachricht ist, die von einer Fahrzeugwaschanlage über den Server gesendet wird, wenn erkannt wird, dass das Fahrzeug in einem von der Fahrzeugwaschanlage vorgegebenen Waschbereich geparkt worden ist, und wobei die Benachrichtigungsnachricht anzeigt, dass die Authentifizierung erfolgreich ist, und wobei, wenn eine der Hardwarevorrichtungen des Fahrzeugs sich nicht im Waschbereitschaftszustand befindet und eine elektronisch steuerbare Vorrichtung ist, die Geräteprüfeinheit dazu eingerichtet ist, die Hardwarevorrichtung zu steuern, um sie in den Waschbereitschaftszustand zu überführen; und
eine Anforderungseinheit (903), die dazu eingerichtet ist, eine Waschanforderungsnachricht an den Server zu senden, um den Server zu veranlassen, die Fahrzeugwaschanlage zu veranlassen, einen Waschdienst für das Fahrzeug zu starten, wenn sich die Hardwarevorrichtungen in den Waschbereitschaftszuständen befinden.

5. System, umfassend einen Server (1202), ein Fahrzeugterminal und eine Fahrzeugwaschanlage, wobei der Server (1202) umfasst:
eine Authentifizierungseinheit (1001), die dazu eingerichtet ist, ein von einem Fahrzeugterminal gesendetes Benutzerkonto zu erfassen und das Benutzerkonto zu authentifizieren; und
eine erste Kommunikationseinheit (1002), die dazu eingerichtet ist,
an das Fahrzeugterminal, wenn die Authentifizierung erfolgreich ist und eine Fahrzeugparkerfolgsnachricht empfangen worden ist, eine Benachrichtigungsnachricht und die Fahrzeugparkerfolgsnachricht zu senden, um das Fahrzeugterminal zu veranlassen, zu prüfen, ob sich Hardwarevorrichtungen des Fahrzeugs in Waschbereitschaftszuständen befinden, und, wenn eine der Hardwarevorrichtungen des Fahrzeugs sich nicht im Waschbereitschaftszustand befindet und eine elektronisch steuerbare Vorrichtung ist, die Hardwarevorrichtung zu steuern, um sie in den Waschbereitschaftszustand zu überführen;
wobei der Server dazu eingerichtet ist, die Fahrzeugwaschanlage zu veranlassen, bei Empfang einer von dem Fahrzeugterminal gesendeten Waschanforderungsnachricht einen Waschdienst für das Fahrzeug zu starten;
wobei die Fahrzeugparkerfolgsnachricht eine Nachricht ist, die von der Fahrzeugwaschanlage gesendet wird, wenn erkannt wird, dass das Fahrzeug in einem von der Fahrzeugwaschanlage vorgegebenen Waschbereich geparkt worden ist, und wobei die Benachrichtigungsnachricht anzeigt, dass die Authentifizierung erfolgreich ist, und
wobei die Waschanforderungsnachricht eine Nachricht ist, die von dem Fahrzeugterminal gesendet wird, wenn erkannt wird, dass sich die Hardwarevorrichtungen in den Waschbereitschaftszuständen befinden.

6. System, umfassend eine Fahrzeugwaschanlage (1201), einen Server (1202) und ein Fahrzeugterminal, wobei die Fahrzeugwaschanlage (1201) umfasst:
eine Parkerkennungseinheit (1101), die dazu eingerichtet ist, zu erkennen, ob ein Fahrzeug in einem von der Fahrzeugwaschanlage vorgegebenen Waschbereich geparkt worden ist;
eine zweite Kommunikationseinheit (1102), die dazu eingerichtet ist:
an den Server, wenn die Parkerkennungseinheit erkennt, dass das Fahrzeug in dem Waschbereich geparkt worden ist, eine Fahrzeugparkerfolgsnachricht zu senden, um den Server zu veranlassen, bei erfolgreicher Authentifizierung eines dem Fahrzeug zugeordneten Benutzerkontos durch den Server, an das Fahrzeugterminal eine Benachrichtigungsnachricht und die Fahrzeugparkerfolgsnachricht zu senden, um das Fahrzeugterminal zu veranlassen, zu prüfen, ob sich Hardwarevorrichtungen des Fahrzeugs in Waschbereitschaftszuständen befinden, und, falls eine der Hardwarevorrichtungen des Fahrzeugs sich nicht im Waschbereitschaftszustand befindet und eine elektronisch steuerbare Vorrichtung ist, die Hardwarevorrichtung zu steuern, um sie in den Waschbereitschaftszustand zu überführen, wobei die Benachrichtigungsnachricht anzeigt, dass die Authentifizierung erfolgreich ist; und
eine Wascheinheit (1103), die dazu eingerichtet ist, bei Empfang einer von dem Server gesendeten Waschanforderungsnachricht einen Waschdienst für das Fahrzeug zu starten, wobei die Waschanforderungsnachricht eine Nachricht ist, die von dem Fahrzeugterminal über den Server gesendet wird, wenn erkannt wird, dass sich die Hardwarevorrichtungen des Fahrzeugs in den Waschbereitschaftszuständen befinden.

## Revendications

1. Procédé de lavage intelligent de véhicules, comprenant :
l'acquisition (201, 301), par un terminal de véhicule, d'un compte utilisateur correspondant à un véhicule et l'envoi du compte utilisateur à un serveur pour amener le serveur à authentifier le compte utilisateur ;
la vérification (204, 306), par le terminal de véhicule, si des dispositifs matériels du véhicule sont dans des états de préparation au lavage lorsqu'un message de notification et un message de confirmation de stationnement du véhicule ont été reçus, le message de confirmation de stationnement du véhicule étant un message envoyé par un lave-auto via le serveur lorsqu'il détecte que le véhicule a été stationné dans une zone de lavage prédéfinie par le lave-auto, et le message de notification indiquant que l'authentification a réussi ;
si l'un quelconque des dispositifs matériels du véhicule n'est pas dans l'état de préparation au lavage et qu'il s'agit d'un dispositif pouvant être commandé électroniquement, la commande, par le terminal de véhicule, du dispositif matériel pour le faire passer à l'état de préparation au lavage ; et
si les dispositifs matériels sont dans les états de préparation au lavage, l'envoi (205, 307), par le terminal de véhicule, d'un message de demande de lavage au serveur pour amener le serveur à déclencher le lave-auto afin qu'il démarre un service de lavage pour le véhicule.

2. Procédé de lavage intelligent de véhicules exécuté par un système comprenant un serveur, un terminal de véhicule et un lave-auto, comprenant :
l'acquisition (201, 301) par le serveur d'un compte utilisateur envoyé par le terminal de véhicule et l'authentification du compte utilisateur par le serveur ;
si l'authentification a réussi et qu'un message de confirmation de stationnement du véhicule a été reçu, l'envoi, au terminal de véhicule, d'un message de notification et du message de confirmation de stationnement pour amener le terminal de véhicule à vérifier si les dispositifs matériels du véhicule sont dans des états de préparation au lavage et, si l'un quelconque des dispositifs matériels du véhicule n'est pas dans l'état de préparation au lavage et s'il s'agit d'un dispositif pouvant être commandé électroniquement, à commander le dispositif matériel pour le faire passer à l'état de préparation au lavage, le message de confirmation de stationnement du véhicule étant un message envoyé par le lave-auto lorsqu'il détecte que le véhicule a été stationné dans une zone de lavage prédéfinie par le lave-auto, et le message de notification indiquant que l'authentification a réussi ; et
lorsqu'il détecte qu'un message de demande de lavage envoyé par le terminal de véhicule, le déclenchement du lave-auto pour qu'il démarre un service de lavage pour le véhicule, le message de demande de lavage étant un message envoyé par le terminal de véhicule lorsqu'il détecte que les dispositifs matériels sont dans les états de préparation au lavage.

3. Procédé de lavage intelligent de véhicules exécuté par un système comprenant un serveur, un terminal de véhicule et un lave-auto, comprenant :
la détection (202, 302) par le lave-auto si un véhicule a été stationné dans une zone de lavage prédéfinie par le lave-auto ;
si le véhicule a été stationné dans la zone de lavage, l'envoi (203, 303), au serveur, d'un message de confirmation de stationnement du véhicule pour amener le serveur, lorsque l'authentification d'un compte utilisateur correspondant au véhicule par le serveur a réussi et que le message de confirmation de stationnement du véhicule a été reçu, à envoyer au terminal de véhicule un message de notification et le message de confirmation de stationnement du véhicule pour déclencher le terminal de véhicule afin qu'il vérifie si les dispositifs matériels du véhicule sont dans des états de préparation au lavage et, si l'un quelconque des dispositifs matériels du véhicule n'est pas dans l'état de préparation au lavage et s'il s'agit d'un dispositif pouvant être commandé électroniquement, à commander le dispositif matériel pour le faire passer à l'état de préparation au lavage, le message de notification indiquant que l'authentification a réussi ; et
lorsqu'il détecte qu'un message de demande de lavage, le démarrage (205, 307) d'un service de lavage pour le véhicule, le message de demande de lavage étant un message envoyé par le terminal de véhicule via le serveur lorsqu'il détecte que les dispositifs matériels du véhicule sont dans les états de préparation au lavage.

4. Terminal de véhicule (1203), comprenant :
une unité d'acquisition (901) configurée pour acquérir un compte utilisateur correspondant à un véhicule et pour envoyer le compte utilisateur à un serveur afin d'amener le serveur à authentifier le compte utilisateur ;
une unité d'inspection des dispositifs (902) configurée pour vérifier si les dispositifs matériels du véhicule sont dans des états de préparation au lavage lorsqu'un message de notification et un message de confirmation de stationnement du véhicule ont été reçus, le message de confirmation de stationnement du véhicule étant un message envoyé par un lave-auto via le serveur lorsqu'il détecte que le véhicule a été stationné dans une zone de lavage prédéfinie par le lave-auto, le message de notification indiquant que l'authentification a réussi, dans lequel si l'un quelconque des dispositifs matériels du véhicule n'est pas dans l'état de préparation au lavage et s'il s'agit d'un dispositif pouvant être commandé électroniquement, le dispositif matériel est commandé pour passer à l'état de préparation au lavage ; et
une unité de demande (903) configurée pour envoyer un message de demande de lavage au serveur afin d'amener le serveur à déclencher le lave-auto pour qu'il démarre un service de lavage pour le véhicule lorsque les dispositifs matériels sont dans les états de préparation au lavage.

5. Système comprenant un serveur (1202), un terminal de véhicule et un lave-auto, comprenant : le serveur (1202) comprenant
une unité d'authentification (1001) configurée pour acquérir un compte utilisateur envoyé par un terminal de véhicule et pour authentifier le compte utilisateur ; et
une première unité de communication (1002) configurée pour :
envoyer au terminal de véhicule, si l'authentification a réussi et qu'un message de confirmation de stationnement du véhicule a été reçu, un message de notification et le message de confirmation de stationnement du véhicule pour amener le terminal de véhicule à vérifier si des dispositifs matériels du véhicule sont dans des états de préparation au lavage et, si l'un quelconque des dispositifs matériels du véhicule n'est pas dans l'état de préparation au lavage et s'il s'agit d'un dispositif pouvant être commandé électroniquement, à commander les dispositifs matériels pour les faire passer à l'état de préparation au lavage, et
le serveur est adapté pour amener le lave-auto à démarrer un service de lavage pour le véhicule lorsqu'il détecte qu'un message de demande de lavage envoyé par le terminal de véhicule, dans lequel
le message de confirmation de stationnement du véhicule est un message envoyé par le lave-auto lorsqu'il détecte que le véhicule a été stationné dans une zone de lavage prédéfinie par le lave-auto, et le message de notification indique que l'authentification a réussi, et
le message de demande de lavage est un message envoyé par le terminal de véhicule lorsqu'il est détecté que les dispositifs matériels sont dans les états de préparation au lavage.

6. Système comprenant un lave-auto (1201), un serveur (1202) et un terminal de véhicule, comprenant :
le lave-auto comprenant une unité de détection de stationnement (1101) configurée pour détecter si un véhicule a été stationné dans une zone de lavage prédéfinie par le lave-auto ;
une deuxième unité de communication (1102) configurée pour :
envoyer au serveur, lorsque l'unité de détection de stationnement détecte que le véhicule a été stationné dans la zone de lavage, un message de confirmation de stationnement du véhicule pour amener le serveur, lorsque l'authentification d'un compte utilisateur correspondant au véhicule par le serveur a réussi, à envoyer au terminal de véhicule un message de notification et le message de confirmation de stationnement du véhicule pour déclencher le terminal de véhicule afin qu'il vérifie si des dispositifs matériels du véhicule sont dans des états de préparation au lavage et, si l'un quelconque des dispositifs matériels du véhicule n'est pas dans l'état de préparation au lavage et s'il s'agit d'un dispositif pouvant être commandé électroniquement, à commander le dispositif matériel pour le faire passer à l'état de préparation au lavage, dans lequel le message de notification indique que l'authentification a réussi ; et
une unité de lavage (1103) configurée pour démarrer un service de lavage pour le véhicule lors de la réception d'un message de demande de lavage envoyé par le serveur, le message de demande de lavage étant un message envoyé par le terminal de véhicule via le serveur lorsqu'il détecte que les dispositifs matériels du véhicule sont dans les états de préparation au lavage.
